# EUROPÄISCHE PATENTSCHRIFT

(11) **EP 0 603 741 B1**
(45) Veröffentlichungstag und Bekanntmachung des Hinweises auf die Patenterteilung: **29.10.1997**
(21) Anmeldenummer: 93120267.5
(22) Anmeldetag: 16.12.1993
(51) Int. Cl.: B60R 16/02

(54) **Kabeltülle**
Cable sleeve
Manchon pour cable

(30) Priorität: 22.12.1992 DE 4243557
(43) Veröffentlichungstag der Anmeldung: 29.06.1994
(73) Patentinhaber: ADAM OPEL AG, 65423 Rüsselsheim (DE)
(72) Erfinder: Hoschek, Wolfgang, D-64546 Mörfelden-Walldorf (DE)
(74) Vertreter: Bergerin, Ralf, Dipl.-Ing.

(56) Entgegenhaltungen:
- DE-C- 3 916 468
- FR-A- 2 335 972
- FR-A- 2 569 911
- FR-A- 2 642 497
- US-A- 4 685 173

## Beschreibung

Die Erfindung betrifft eine Kabeltülle zur Durchführung eines Kabels durch ein eine Innenwand und eine Außenwand aufweisendes Bauteil, welche ein zum Umschließen des Kabels ausgebildetes, elastisches Hüllrohr hat, an welchem an einem Ende ein in eine Öffnung einer der Wände einknöpfbares Halteelement angeformt ist, wobei das Halteelement über ein das Kabel umschließendes, elastisches Schlauchstück mit einem eine Öffnung der anderen Wand verschließenden Verschlußstück verbunden ist.

Eine Kabeltülle der vorstehenden Art ist Gegenstand der FR-A-2 335 972. Die in dieser Schrift gezeigte Kabeltülle dient der feuchtigkeits- und staubdichten Zuführung eines Kabels aus einem Motorraum zu einem Blinker eines Kraftfahrzeugs. Das Verschlußstück liegt bei der bekannten Kabeltülle von außen her gegen die Außenwand dichtend an und verhindert dadurch das Eindringen von Feuchtigkeit und Staub von außen nach innen.

Kabeltüllen der vorstehenden Art werden in Kraftfahrzeugen beispielsweise auch benötigt, um elektrische Leitungen aus den A-Säulen in die jeweilige Vordertüre zu führen, damit dort beispielsweise ein elektrischer Fensterheber oder ein Türverriegelungsmechanismus mit elektrischer Energie versorgt werden kann. Das Halteelement ist dann als Spritzwasser-Dichtelement ausgebildet und wird bei der Montage in eine für die Kabeldurchführung vorgesehene Öffnung der Außenseite der A-Säule geknöpft, um ein Eindringen von Spritzwasser in die jeweilige A-Säule auszuschließen. Ein Eindringen von Geräuschen in den Fahrzeuginnenraum durch die der Kabeldurchführung dienende Öffnung in einer Innenwand verhindert man durch ein radial geschlitztes Verschlußstück, welches man nach der Montage des Kabels mit der Kabeltülle auf das Kabel aufschiebt und dann in die innenseitige Öffnung einsetzt.

Die nachträglich zu montierenden Verschlußstücke stellen keinen optimalen Schallschutz dar, weil der radiale Schlitz akustisch selten dicht ist. Auch erfordert dieser Arbeitsgang bei der Montage ein Bereithalten der entsprechenden Teile.

Der Erfindung liegt das Problem zugrunde, eine Kabeltülle der eingangs genannten Art so auszubilden, daß mit ihr ein möglichst guter Geräuschschutz zu erzielen ist und die Montage möglichst kostengünstig erfolgen kann.

Dieses Problem wird erfindungsgemäß dadurch gelöst, daß das Verschlußstück konzentrisch zueinander einen zum freien Ende sich im Querschnitt verjüngenden Innenkörper zum Anlegen gegen das Kabel und einen Außenkörper mit dem flanschartigen Wulst zum Aufsitzen auf der Außenseite der Innenwand hat und daß der Innenkörper und der Außenkörper durch mehrere radiale Rippen miteinander verbunden sind.

Ein solches Verschlußstück ermöglicht eine optimale akustische Abdichtung, da es zuverlässig dichtend sowohl gegen die Wandung der es aufnehmenden Öffnung als auch gegen das durch die Kabeltülle führende Kabel anliegt und durch die Elastizität des Schlauchstückes zuverlässig mit axialer Vorspannung in der dichtenden Position in der Öffnung der Innenwand gehalten wird. Zugleich ist das Verschlußstück kostengünstig zu montieren, weil es einstückig mit der Kabeltülle ausgebildet ist.

Das Schlauchstück kann sehr unterschiedlich gestaltet sein. Es ist auf seiner Innenseite glatt, so daß das Kabel problemlos eingeführt werden kann, und vermag seine Aufgabe als Zugglied optimal zu erfüllen, wenn gemäß einer Weiterbildung der Erfindung das Schlauchstück aus einem dünnwandigen Rohrkörper und außenseitig auf diesem angeformten, in Längsrichtung des Schlauchstückes verlaufenden, wulstförmigen Rippen besteht.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Ansicht der Kabeltülle in einem montierten Zustand,
- Fig. 2: eine halbseitig geschnitten dargestellte Seitenansicht der Kabeltülle,
- Fig. 3: eine Draufsicht auf die Kabeltülle,
- Fig. 4: einen Schnitt durch die Kabeltülle entlang der Linie IV - IV in Figur 2.

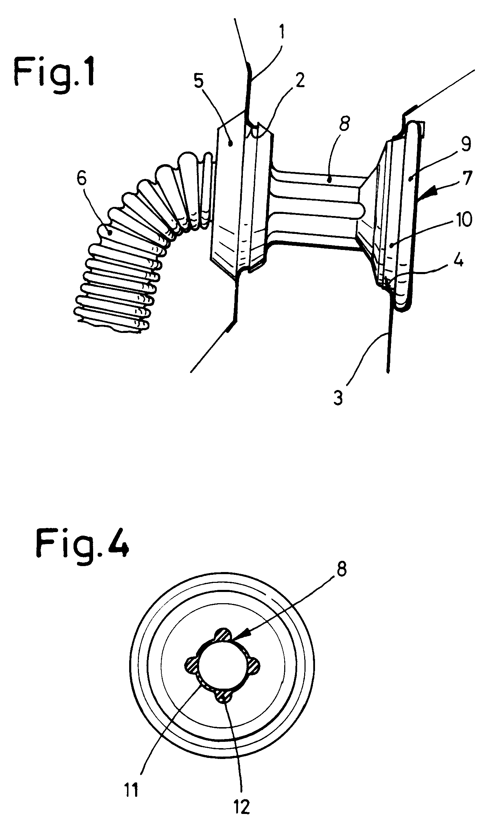

Die Figur 1 zeigt eine Außenwand 1 mit einer Öffnung 2 und eine Innenwand 3 mit einer zur Öffnung 2 fluchtenden Öffnung 4. In der Öffnung 2 der Außenwand 1 sitzt ein Spritzwasser-Dichtelement 5 einer Kabeltülle 6. Wichtig für die Erfindung ist ein Verschlußstück 7, welches über ein Schlauchstück 8 mit dem Spritzwasser-Dichtelement 5 verbunden ist und in der Öffnung 4 der Innenwand 3 sitzt. Zum Versperren der Öffnung 4 hat das Verschlußstück 7 einen flanschartigen, umlaufenden Wulst 9, mit dem es gegen die dem Innenraum zugewandte Seite der Innenwand 3 aufsitzt. Zusätzlich greift das Verschlußstück 7 mit einem Kegelstumpfbereich 10 dichtend in die Öffnung 4. Das Schlauchstück 8 ist so ausgebildet, daß es das Verschlußstück 7 im in Figur 1 dargestellten montierten Zustand in Richtung des Spritzwasser-Dichtelementes 5 vorspannt.

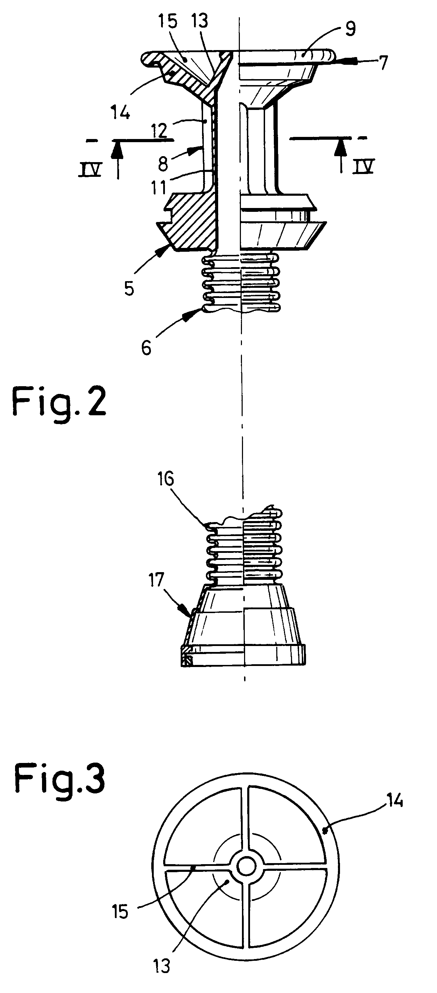

Die Figuren 2 und 4 lassen erkennen, daß das Schlauchstück 8 aus einem dünnwandigen Rohrkörper 11 und vier außenseitig an diesem angeformten, wulstartigen Rippen 12 besteht. Der Halbschnitt gemäß Figur 2 zeigt weiterhin, daß das Verschlußstück 7 einen Innenkörper 13 und konzentrisch dazu einen Außenkörper 14 hat, wobei diese Teile sich durch radiale Rippen 15 gegeneinander abstützen. Der Innenkörper 13 verengt sich zum Auslaß der Kabeltülle 6 hin, so daß ein in der Kabeltülle 6 verlaufendes, nicht gezeigtes Kabel von dem Innenkörper 13 dicht umschlossen wird. Der Außenkörper 14 hat den Wulst 9, der gegen die Innenwand 3 anliegt, was anhand der Figur 1 erläutert wurde.

In Figur 2 ist weiterhin ein nach Art eines Faltenbalges gewelltes Hüllrohr 16 dargestellt, welches das Kabel zwischem dem Spritzwasser-Dichtelement 5 und einer Kappe 17 am anderen Ende der Kabeltülle 6 umgibt.

Die Draufsicht gemäß Figur 3 zeigt, daß vom Innenkörper 13 insgesamt vier radiale Rippen 15 zum Außenkörper 14 führen.

## Patentansprüche

1. Kabeltülle (6) zur Durchführung eines Kabels durch ein eine Innenwand (3) und eine Außenwand (1) aufweisendes Bauteil, welche ein zum Umschließen des Kabels ausgebildetes, elastisches Hüllrohr hat, an welchem an einem Ende ein in eine Öffnung (2) einer der Wände einknöpfbares Halteelement angeformt ist, wobei das Halteelement über ein das Kabel umschließendes, elastisches Schlauchstück (8) mit einem eine Öffnung (4) der anderen Wand (3) verschließenden Verschlußstück (7) verbunden ist, **dadurch gekennzeichnet**, daß das Verschlußstück (7) konzentrisch zueinander einen zum freien Ende sich im Querschnitt verjüngenden Innenkörper (13) zum Anlegen gegen das Kabel und einen Außenkörper (14) mit dem flanschartigen Wulst (9) zum Aufsitzen auf der Außenseite der Innenwand (3) hat und daß der Innenkörper (13) und der Außenkörper (14) durch mehrere radiale Rippen (15) miteinander verbunden sind.

2. Kabeltülle nach Anspruch 1, **dadurch gekennzeichnet**, daß das Schlauchstück (8) aus einem dünnwandigen Rohrkörper (11) und außenseitig auf diesem angeformten, in Längsrichtung des Schlauchstückes (8) verlaufenden, wulstförmigen Rippen (12) besteht.

## Claims

1. Cable grommet (6) for passage of a cable through a structural member comprising an inner panel (3) and an outer panel (1), which has a resilient casing tube which is designed to surround the cable and on which is integrally formed at one end a holding element which can be fitted in an opening (2) in one of the panels, wherein the holding element is connected by a resilient hose piece (8) surrounding the cable to a sealing piece (7) which seals an opening (4) in the other panel (3), characterised in that the sealing piece (7) has concentrically with each other an inner body (13) tapering in cross-section towards the free end for application to the cable and an outer body (14) with a flange-like bead (9) for mounting on the outer side of the inner panel (3) and in that the inner body (13) and the outer body (14) are connected to each other by several radial ribs (15).

2. Cable grommet according to claim 1, characterised in that the hose piece (8) consists of a thin-walled tube body (11) and, formed integrally on the outside thereof, bead-like ribs (12) extending in the longitudinal direction of the hose piece (8).

## Revendications

1. Passe-câble (6) pour passer un câble à travers un élément de structure pourvu d'une paroi intérieure (3) et d'une paroi extérieure (1), comportant un tube-gaine élastique qui est agencé de manière à entourer le câble et porte à une extrémité un élément de fixation pouvant être monté dans une ouverture (2) de l'une des parois, l'élément de fixation étant lié par l'intermédiaire d'un tronçon (8) de tube souple élastique entourant le câble à un élément d'obturation (7) fermant une ouverture (4) dans l'autre paroi (3), caractérisé par le fait que l'élément d'obturation (7) comporte, disposés de manière concentrique l'un par rapport à l'autre, un élément intérieur (13) dont la section décroît en direction de l'extrémité libre, à des fins de serrage sur le câble, et un élément extérieur (14) pourvu d'un bourrelet (9) formant collet destiné à être appliqué sur la face extérieure de la paroi intérieure (3) et par le fait que l'élément intérieur (13) et l'élément extérieur (14) sont liés l'un à l'autre par plusieurs nervures (15) radiales.

2. Passe-câble selon la revendication 1, caractérisé par le fait que le tronçon (8) de tube souple est formé d'un élément (11) tubulaire à paroi mince avec formées sur celui-ci, côté extérieur, des nervures (12) en forme de bourrelets qui s'étendent dans la direction longitudinale du tronçon de tube souple (8).
